# EUROPÄISCHE PATENTSCHRIFT

(11) **EP 1 493 326 B1**
(45) Veröffentlichungstag und Bekanntmachung des Hinweises auf die Patenterteilung: **06.12.2006**
(21) Anmeldenummer: 04013455.3
(22) Anmeldetag: 08.06.2004
(51) Int. Cl.: A01F 15/14

(54) **Knotereinrichtung für eine Grossballenpresse**
Knotting device for a big bale press
Dispositif noueur pour une presse à grosses balles

(30) Priorität: 27.06.2003 DE 10329136
(43) Veröffentlichungstag der Anmeldung: 05.01.2005
(73) Patentinhaber: CLAAS Selbstfahrende Erntemaschinen GmbH, 33428 Harsewinkel (DE)
(72) Erfinder: Tertilt, Werner, 33428 Marienfeld (DE)

(56) Entgegenhaltungen:
- WO-A-02/21902
- CH-A- 243 973
- DE-A- 3 019 949
- DE-A- 10 060 211
- DE-A- 19 819 595

## Beschreibung

Die Erfindung bezieht sich auf eine Knotereinrichtung für eine Großballenpresse, insbesondere für landwirtschaftliches Erntegut, nach dem Oberbegriff des Patentanspruches 1.

Sämtliche bisher bekannten Knotereinrichtungen mit einer einfachen oder zweifachen Knotenbildung sind im oberen Bereich an der horizontal und quer zum Presskanal angeordneten angetriebenen Knoterwelle gelagert und im unteren Rahmenbereich starr an der oberen Wand des Presskanals befestigt. Dabei sind die Knotereinrichtungen so angeordnet, dass die Bindenadeln möglichst auf einer steil verlaufenden Bahn zu den Funktionselementen gelangen, um den Abstand zwischen dem Nadelrücken und der Knoterwelle gering zu halten, wodurch sich das Bauvolumen des Presskolbens reduziert und die Nadelschlitze im Presskolben entsprechend kürzer ausgeführt werden können. Aufgrund dieser Anordnung treten durch eine ungünstige Lageveränderung des Bindegarns während des steil in die Knotereinrichtung eintretenden vorderen Abschnitts der Bindenadeln beim Einlegen des Bindegarns in das Garnklemmrad unmittelbar vor dem Bindevorgang Funktionsstörungen auf, so dass keine zuverlässige Knotenbildung gewährleistet ist. Auch ein Ausrichten bzw. Nachjustieren der Knotereinrichtung beseitigt nicht diese Nachteile, da sich in diesem Fall der Knoten nicht mehr vom Knoterschnabel abziehen lässt. Solche Knotereinrichtungen sind beispielsweise aus den in den Zeichnungen und Beschreibungen der DE 27 46 678 C2, DE 100 60 211 A1 und DE 198 19 595 A1 dargestellten Ausführung bekannt.

Der Erfindung liegt die Aufgabe zugrunde, die Lage der Knotereinrichtung während des Press- und Bindevorganges den optimalen Erfordernissen selbsttätig anzupassen, so dass eine störungsfreie und funktionssichere Arbeitsweise unter allen Betriebszuständen möglich ist.

Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Durch die erfindungsgemäße Schwenkvorrichtung der Knotereinrichtung befinden sich die Funktionselemente zu jedem Zeitpunkt in der günstigsten funktionsgerechten Stellung, so dass keinerlei Fehler bei der Bildung und beim Abzug des Knotens auftreten.

Die Erfindung wird nachstehen an einem Ausführungsbeispiel näher erläutert. Die zugehörigen Zeichnung zeigen
- Fig. 1: den Presskanal einer Großballenpresse mit dem Bereich der Knotereinrichtung in einer Seitenansicht, wobei die obere Stellung der Bindenadel durch Strich-Punkt-Linien dargestellt ist,

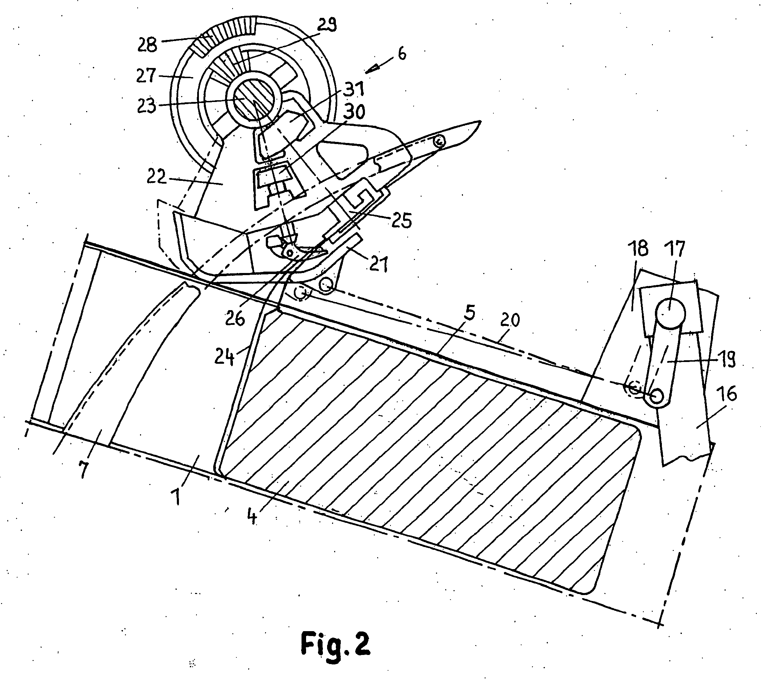

- Fig. 2: die Knotereinrichtung mit der Bindenadel in der oberen Stellung während der Einführung des Bindegarns in das Garnklemmrad, wobei die geschwenkte Stellung der Knotereinrichtung in der unteren Lage der Bindenadel mit dünnen Strich-Punkt-Linien dargestellt ist,

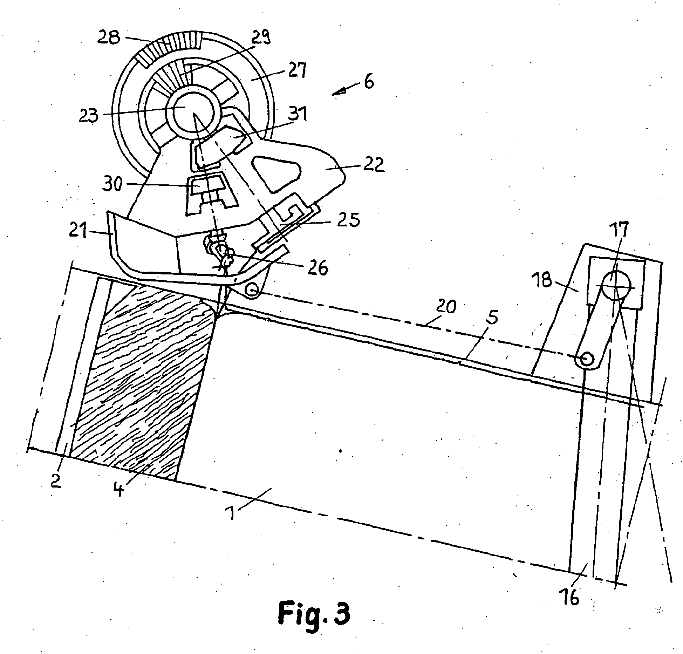

- Fig. 3: die Stellung der Knotereinrichtung während des Abziehens des fertigen Knotens vom Knoterschnabel.

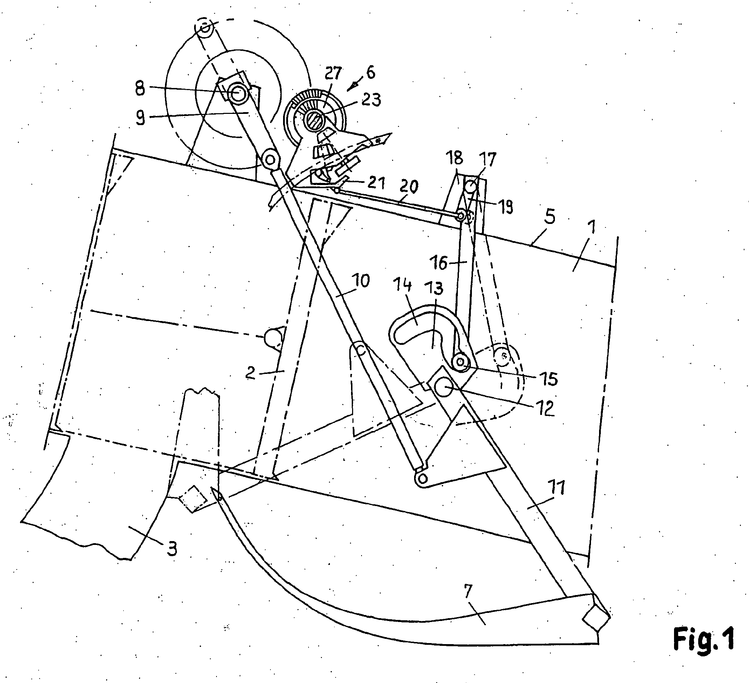

Bei dem in der Fig. 1 teilweise dargestellten Presskanal 1 einer Großballenpresse erfolgt mittels eines geradlinig bewegten Presskolbens 2 der Pressvorgang des über einen Zuführkanal 3 geförderten Erntegutes zu quaderförmigen Ballen 4. Auf der oberen Wand 5 des Presskanals 2 sind die Knotereinrichtugnen 6 mit den zugehörigen Antrieben sowie die Antriebe für die Bindenadeln 7 angeordnete. Sowohl die Bindenadeln 7 als auch die Knotereinrichtungen 6 werden über eine vom Hauptantrieb der Großballenpresse angetriebene Vorgelegewelle 8 angetrieben.

Der Antrieb der Bindenadeln 7 erfolgt über einen auf der Vorgelegewelle 8 angeordneten Kurbelarm 9, der die Drehbewegung auf eine Zugstang 10 überträgt. Das Ende der Zugstange 10 ist mit einer Nadelschwinge 11 verbunden, die auf einer Achse 12 schwenkbar gelagert ist. Das freie Ende der Nadelschwinge 11 steht mit den Bindenadeln 7 in Antriebsverbindung. Im Bereich der Achse 12 ist eine starr mit der Nadelschwinge 11 verbundene Lasche 13 mit einer inneren Kurvenführung 14 angeordnet. Innerhalb der Kurvenführung 14 läuft eine Rolle 15, die an einer Koppelstange 16 drehbar befestigt ist. Die Koppelstange 16 ist mit einer Welle 17 verbunden, die an einem Lagerbock 18 an der oberen Wand 5 des Presskanals 1 schwenkbeweglich gelagert ist. Die Welle 17 ist mit einem Hebelarm 19 verbunden, an dessen freiem Ende eine Verbindungsstange 20 angelenkt ist, die mit einer unteren Grundplatte 21 der Knotereinrichtung 6 gelenkig verbunden ist. Die durch die Schwenkbewegung der Bindenadeln 7 ausgelöste Bewegung der Rolle 15 innerhalb der Kurvenführung 14 wird über die Koppelstange 16 auf die Welle 17 übertragen. Die dadurch verursachte, Schwenkbewegung der Welle 17 wird über den Hebelarm 19 und die Verbindungsstange 20 zu der Grundplatte 21 geleitet, wodurch diese entsprechend bewegt wird. Die Grundplatte 21 ist fest mit dem Rahmen 22 der Knotereinrichtung 6 verbunden. Der Rahmen 22 ist schwenkbar an der Knoterwelle 23 gelagert. In Abhängigkeit von der jeweiligen Stellung der Bindenadeln 7 wird die gesamte Knotereinrichtung 6 mit ihren Funktionselementen selbsttätig um die Knoterwelle 23 geschwenkt. Durch die gesteuerte Schwenkbewegung der Knotereinrichtung 6 wird sowohl das zuverlässige Einlegen des Bindegarns 24 am Garnklemmrad 25 als auch das sichere Abziehen des fertigen Knotens vom Knoterschnabel 26 gewährleistet, da beide Vorgänge in Abhängigkeit von der optimalen Stellung zu den Bindenadeln 7 bzw. der gesamten Synchronisation des Bewegungsablaufes der Knotenbildung erfolgen.

Entsprechend der jeweiligen Leistungsklasse und den Abmessungen des Presskanals 1 sind auf der gemeinsam von der Vorgelegewelle 8 angetriebenen und quer zum Presskanal 1 verlaufenden Knoterwelle 23 mehrere Knotereinrichtung 6 nebeneinander angeordnet. Jede Knotereinrichtung 6 besitzt eine Antriebsscheibe 27, die verdrehfest und in axialer Richtung verschiebebeweglich auf der Knoterwelle 23 befestigt ist. Flankenseitig weisen die Antriebsscheiben 27 je ein äußeres Zahnsegment 28 und ein inneres Zahnsegment 29 auf. Die äußeren Zahnsegmente 28 dienen zum Antrieb des Knoterschnabels 26 und die inneren Zahnsegmente 29 zum Antrieb des Garnklemmrades 25. Während der Drehbewegung der Antriebsscheibe 27 kommen die äußeren Zahnsegment 28 mit einem mit dem Knoterschnabel 26 in Verbindung stehenden Ritzel 30 und die inneren Zahnsegmente 29 mit einem mit dem Garnklemmrad 25 verbundenen Ritzel 31 zum Eingriff und bewegen diese zum erforderlichen Zeitpunkt der Knotenbildung.

Alle einzelnen Funktionselemente der Knotereinrichtung 6 sind an einem gemeinsamen Rahmen 22 angeordnet, der an der Knoterwelle 23 gelagert und um diese schwenkbar ist. Die im unteren Bereich des Rahmens 22 angeordnete profilierte Grundplatte 21 liegt lose an der oberen Wand 5 des Presskanals 2 an.

### Bezugszeichen

- 1 -: Presskanal
- 2 -: Presskolben
- 3 -: Zuführkanal
- 4 -: Ballen
- 5 -: obere Wand
- 6 -: Knotereinrichtung
- 7 -: Bindenadel
- 8 -: Vorgelegewelle
- 9 -: Kurbelarm
- 10 -: Zugstange
- 11 -: Nadelschwinge
- 12 -: Achse
- 13 -: Lasche
- 14 -: Kurvenführung
- 15 -: Rolle
- 16 -: Koppelstange
- 17 -: Welle
- 18 -: Lagerbock
- 19 -: Hebelarm
- 20 -: Verbindungsstange
- 21 -: Grundplatte
- 22 -: Rahmen
- 23 -: Knoterwelle
- 24 -: Bindegarn
- 25 -: Garnklemmrad
- 26 -: Knoterschnabel
- 27 -: Antriebsscheibe
- 28 -: äußeres Zahnsegment
- 29 -: inneres Zahnsegment
- 30 -: Ritzel
- 31 -: Ritzel

## Patentansprüche

1. Knotereinrichtung für eine Großballenpresse, insbesondere für landwirtschaftliches Erntegut, die oberhalb des Presskanals auf einer angetriebenen Knoterwelle gelagert ist und der eine Bindenadel zur Zuführung des für die Umschnürung der gepressten quaderförmigen Ballen erforderlichen Bindegarns zugeordnet ist,
**dadurch gekennzeichnet,**
**dass** die Knotereinrichtung (6) über einen von der jeweiligen Stellung der Bindenadel (7) abhängigen Steuerungsmechanismus um die Knoterwelle (23) schwenkbar angeordnet ist.

2. Knotereinrichtung nach Anspruch 1,
**dadurch gekennzeichnet,**
**dass** die Bindenadel (7) um eine Achse (12) schwenkbar ist und im Bereich der Achse (12) eine starr mit der Nadelschwinge (11) verbundene Lasche (13) mit einer inneren Kurvenführung (14) angeordnet ist.

3. Knotereinrichtung nach einem der vorhergehenden Ansprüche,
**dadurch gekennzeichnet,**
**dass** eine innerhalb der Kurvenführung (14) gleitend angeordnete Rolle (15) an einer Koppelstange (16) befestigt ist, die mit einer schwenkbeweglich gelagerten Welle (17) verbunden ist.

4. Knotereinrichtung nach einem der vorhergehenden Ansprüche,
**dadurch gekennzeichnet,**
**dass** die Welle (17) mit einem Hebelarm (19) verbunden ist, an dessen freiem Ende eine Verbindungsstange (20) angelenkt ist, die mit einer Grundplatte (21) des Rahmens (22) der Knotereinrichtung (6) gelenkig verbunden ist.

5. Knotereinrichtung nach einem der vorhergehenden Ansprüche,
**dadurch gekennzeichnet,**
**dass** der Rahmen (22) schwenkbar an der Knoterwelle (23) gelagert ist.

6. Knotereinrichtung nach einem der vorhergehenden Ansprüche,
**dadurch gekennzeichnet,**
**dass** die Grundplatte (21) lose an der oberen Wand (5) des Presskanals (1) anliegt.

## Claims

1. A knotter device for a big bale press, in particular for agricultural crop material, which is supported above the pressing passage on a driven knotter shaft and with which there is associated a binding needle for feeding the binding yam required for tying around the pressed cuboidal bale,
**characterised in that**
the knotter device (6) is arranged pivotably about the knotter shaft (23) by way of a control mechanism dependent on the respective position of the binding needle (7).

2. A knotter device according to claim 1 **characterised in that** the binding needle (7) is pivotable about a shaft (12) and arranged in the region of the shaft (12) is a plate (13) which is rigidly connected to the needle swing arm (11) and which has an internal cam guide (14).

3. A knotter device according to one of the preceding claims **characterised in that** a roller (15) arranged slidingly within the cam guide (14) is fixed to a coupling rod (16) connected to a pivotably movably supported shaft (17).

4. A knotter device according to one of the preceding claims **characterised in that** the shaft (17) is connected to a lever arm (19), to the free end of which is pivotably connected a connecting rod (20) which is hingedly connected to a base plate (21) of the frame (22) of the knotter device (6).

5. A knotter device according to one of the preceding claims **characterised in that** the frame (22) is supported pivotably at the knotter shaft (23).

6. A knotter device according to one of the preceding claims **characterised in that** the base plate (21) bears loosely against the upper wall (5) of the pressing passage (1).

## Revendications

1. Dispositif de nouage pour une presse à grosses balles, destiné notamment à des produits agricoles de récolte, qui est monté au-dessus du canal de presse sur un arbre de nouage entraîné et auquel est associée une aiguille de liage pour amener la ficelle de liage nécessaire au ficelage des balles parallélépipédiques pressées, **caractérisé en ce que** le dispositif de nouage (6) est monté pivotant autour de l'arbre de nouage (23) par l'intermédiaire d'un mécanisme de commande dépendant de la position de l'aiguille de liage (7).

2. Dispositif de nouage selon la revendication 1, **caractérisé en ce que** l'aiguille de liage (7) peut basculer autour d'un axe (12), et dans la zone de celui-ci se trouve une patte (13) qui porte un guidage à piste (14) interne et qui est relié rigidement à la bielle d'aiguille (11).

3. Dispositif de nouage selon la revendication 1 ou 2, **caractérisé en ce qu'**à l'intérieur du guidage à piste (14) peut glisser un galet (15) qui est fixé à une tige d'accouplement (16) reliée à un arbre (17) monté basculant.

4. Dispositif de nouage selon une des revendications précédentes, **caractérisé en ce que** l'arbre (17) est relié à un bras de levier (19) à l'extrémité duquel est articulée une tige de liaison (20) elle-même reliée par articulation à une plaque de base (21) du cadre (22) du dispositif de nouage (6).

5. Dispositif de nouage selon une des revendications précédentes, **caractérisé en ce que** le cadre (22) est monté basculant sur l'arbre de nouage (23).

6. Dispositif de nouage selon une des revendications précédentes, **caractérisé en ce que** la plaque de base (21) est en contact libre avec la paroi supérieure (5) du canal de presse (1).
